# FASCICULE DE BREVET EUROPEEN

(11) **EP 0 631 994 B1**
(45) Date de publication et mention de la délivrance du brevet: **14.01.1998**
(21) Numéro de dépôt: 94401470.3
(22) Date de dépôt: 28.06.1994
(51) Int. Cl.: C04B 20/00, C04B 28/02, C04B 24/38, C09K 17/00

(54) **Coulis de ciment injectable à propriétés améliorées**
Injektionsschlamm mit verbesserten Eigenschaften
Injectable cement grout with improved properties

(30) Priorité: 02.07.1993 FR 9308128
(43) Date de publication de la demande: 04.01.1995
(73) Titulaire: SOLETANCHE BACHY FRANCE, 92000 Nanterre (FR)
(72) Inventeur: Gandais, Michel Auguste Georges, F-77930 Saint Sauveur Sur Ecole (FR); Dufournet Bourgeois, Françoise Marie, F-75018 Paris (FR); Lacour, Yves Marie François René, F-92290 Chatenay Malabry (FR)
(74) Mandataire: Colas, Jean-Pierre

(56) Documents cités:
- FR-A- 2 390 400
- US-A- 2 655 004
- US-A- 3 558 335
- Encyclopedia of Polymer Science: cellulose ethers

## Description

L'invention concerne un nouveau coulis injectable à propriétés améliorées.

Les coulis injectables à base de liant hydraulique sont largement utilisés pour le traitement de consolidation et/ou d'étanchement de sols ou de structures. Ces coulis peuvent être à base de ciment Portland sans ou avec constituants secondaires, de ciment produit à partir de laitier de haut fourneau, de ciment alumineux, etc...

Ces coulis peuvent être injectés pour remplir des vides intergranulaires de sols, des fissures d'un terrain ou d'une structure, ou des espaces destinés à assurer des scellements, par exemple de tirants, ou de clous ou de micropieux armés.

Les propriétés les plus importantes d'un coulis injectable sont la stabilité, la résistance à l'essorage, la viscosité du coulis au moment de son utilisation ainsi que la résistance à la compression simple du coulis durci.

Bien que l'on dispose d'une large gamme de coulis, on a toujours besoin de produits plus performants.

L'invention vise donc à fournir un coulis injectable à base de liant hydraulique à propriétés améliorées, en particulier à haute stabilité.

Plus précisément, l'invention concerne un coulis injectable comprenant un liant hydraulique en suspension dans de l'eau, caractérisé en ce qu'il comprend, en outre, par rapport au poids du liant hydraulique, (A) de 2 à 50% en poids de particules d'au moins une substance minérale dont le diamètre médian est inférieur à la moitié du diamètre médian des particules du liant hydraulique, et (B) de 0,05 à 5% en poids d'hydroxyéthylcellulose.

L'invention concerne également un procédé de consolidation et/ou d'étanchement de milieux granulaires et/ou de milieux fissurés par injection dans un tel milieu d'un coulis durcissable à base d'un liant hydraulique, caractérisé en ce que ledit coulis est tel que défini ci-dessus.

La substance minérale particulaire (A) peut être une substance inerte vis-à-vis du liant hydraulique, ou réactive avec ce dernier à condition que cette réactivité ne dégrade pas sensiblement les propriétés essentielles du coulis. Des exemples non limitatifs de poudres de substances minérales utilisables sont des poudres de mica, talc, kaolin, calcite, feldspath, dolomite, silice, bioxyde de titane, alumine, etc.... En ce qui concerne la silice, on peut utiliser aussi bien de la silice de fumée que de la silice broyée ou précipitée.

La substance minérale (A) doit présenter une granulométrie plus fine que celle du liant hydraulique utilisé, car son rôle est de fournir une meilleure distribution granulométrique des particules en suspension.

Des essais ont montré que de meilleurs résultats sont obtenus lorsque le diamètre médian d₅₀ des particules de la substance minérale est inférieur à la moitié du diamètre médian des particules de liant hydraulique. Habituellement le d₅₀ de la poudre de substance minérale sera compris entre 0,01 et 10 µm, de préférence entre 0,01 et 5 µm.

La proportion de substance minérale n'est pas très critique et dépend de la finesse de la poudre utilisée. De façon large elle peut représenter de 0,2 à 50% du poids du liant hydraulique. En dessous de 0,2% l'effet de l'ajout de substance minérale est insignifiant, tandis qu'au-dessus de 50% l'ajout de la substance minérale peut dégrader les propriétés du coulis ou du produit obtenu après durcissement du coulis. On préfère habituellement incorporer de 1 à 10% de substance minérale particulaire (A), en particulier 2 à 5%.

Les hydroxyéthylcelluloses sont des produits bien connus, disponibles dans le commerce, qu'il paraît inutile de décrire davantage ici. On les utilise dans l'invention à titre de rétenteurs d'eau.

La Demanderesse a trouvé que, parmi les divers types d'éthers de cellulose, seules les hydroxyéthylcelluloses et les méthylhydroxyéthylcellulose étaient utilisables, les carboxyméthylcelluloses et les carboxyméthylhydroxyéthylcelluloses provoquant la floculation des coulis. Par ailleurs, la Demanderesse a trouvé que les hydroxyéthylcelluloses donnaient des coulis présentant des propriétés bien supérieures à celles des coulis comprenant des méthylhydroxyéthylcelluloses, notamment en matière de viscosité, de résistance à l'essorage, et de résistance mécanique à court terme.

L'hydroxyéthylcellulose (HEC) peut être utilisée à raison de 0,05 à 5% du poids du liant hydraulique. En dessous de 0,05% l'effet améliorant produit n'est pas significatif et au-dessus de 5% la viscosité du coulis tend à devenir trop élevée. Les meilleurs résultats sont obtenus pour une proportion d'HEC représentant 0,1 à 1% du poids du liant hydraulique. De préférence, on utilisera une qualité de HEC présentant un bas degré de viscosité, si ont veut obtenir la viscosité du coulis la plus basse possible.

Comme liant hydraulique, on peut utiliser tous les liants hydrauliques connus, par exemple le ciment Portland, les ciments de laitiers, les ciments alumineux, les pouzzolanes, les cendres volantes, etc...

On peut également incorporer au coulis, tous les adjuvants communément employés dans les compositions à base de liant hydraulique, notamment des fluidifiants, ou dans les coulis, par exemple des charges calcaires ou siliceuses de granulométrie plus grossière que celle de la substance minérale de l'invention.

La proportion de liant hydraulique dans l'eau est celle des coulis classiques. A titre indicatif le rapport pondéral liant hydraulique/eau peut varier de 0,2 : 1 à 3 : 1, de préférence d'environ 0,5 : 1 à 1,5 : 1, selon le type de liant hydraulique. En particulier dans le cas de ciment ultrafin, le rapport C/E sera inférieur à 1 : 1, de préférence de 0,3 : 1 à 0,8 : 1.

L'invention va être maintenant illustrée davantage par les exemples non limitatifs suivants :

Dans les exemples, les propriétés des coulis ont été déterminées par les méthodes suivantes.

La résistance à l'essorage est mesurée par un essai de filtration. L'appareil employé est un filtre-presse BAROID^{(R)} du genre couramment utilisé pour caractériser les boues de forage. Un volume de 600 cm³ environ de coulis est introduit dans une cellule dont la partie inférieure est constituée par une surface filtrante. Une pression de 0,7 MPa est appliquée sur le coulis. La quantité d'eau passant à travers la surface filtrante est alors mesurée en fonction de la durée d'application de la pression et comparée au résultat obtenu avec un coulis-témoin exempt des additifs (A) et (B) de l'invention.

La stabilité du coulis est déterminée par un essai de décantation. Un litre de coulis est introduit dans une éprouvette en verre graduée. Le coulis est maintenu au repos pendant 2 heures, on mesure alors la quantité d'eau surnageante. Cette eau exprimée en pourcentage du volume initial, caractérise la décantation du coulis.

La viscosité, exprimée en secondes, est le temps mis par 1 litre de coulis à s'écouler à travers un cône Marsh dont le diamètre de l'ajutage est égal à 4,75 mm.

La résistance à la compression Rc est mesurée sur le coulis durci par la méthode d'écrasement en compression simple d'éprouvettes cylindriques d'élancement 2 (diamètre = 40 mm, hauteur = 80 mm) à l'aide d'une presse d'écrasement après 1, 2, 3 ou 4 jours de durcissement, selon le cas, et est exprimée en MPa.

### Exemples 1 à 9, Exemples témoins 1 à 5 et Exemples comparatifs 1 et 2

On a préparé des coulis ayant les compositions récapitulées dans le Tableau ci-dessous par le mode opératoire général suivant :

Dans un malaxeur, on introduit l'eau de gâchage, on met en marche le malaxeur, on dissout l'éther cellulosique dans l'eau de gâchage, puis on ajoute le liant hydraulique et ensuite la poudre fine

On a déterminé les propriétés des coulis résultants par les méthodes mentionnées précédemment et on a rassemblé les résultats dans le Tableau ci-après.

Dans les exemples témoins 1 et 2, les exemples 1 et 2 et les exemples comparatifs 1 et 2 le liant utilisé était un ciment de laitier de haut fourneau type CLK 45 de la Société des Ciments Français ayant un d₅₀ d'environ 11 µm.

Pour les exemples-témoins 3 et 4 et les exemples 3, 4, 5 et 6, le liant utilisé était un ciment Portland type CPA 55 également de la Société des Ciments Français ayant un d₅₀ d'environ 18 µm.

Dans les exemples 7-9 et l'exemple témoin 5, le liant utilisé était un ciment ultra-fin vendu sous la désignation commerciale SPINOR A par la Société Ciments d'Origny, ayant un d₅₀ de 2,5 µm.

L'origine et le d₅₀ éventuel des autres matériaux utilisés étaient les suivants :

| | Fournisseur | Désignation commerciale | d₅₀ en µm |
|---|---|---|---|
| SiO₂ | ELKEM | Microsilice | 0,5 |
| Al₂O₃ | DEGUSSA | Aluminium oxyde C | 0,02 |
| TiO₂ | DEGUSSA | Titanium dioxyde P25 | 0,03 |
| HEC 20 | HOECHST | Tylose H20 | |
| HEC 300 | HOECHST | Tylose H300 P | |
| MHEC 300 | HOECHST | Tylose MH 300 P | |

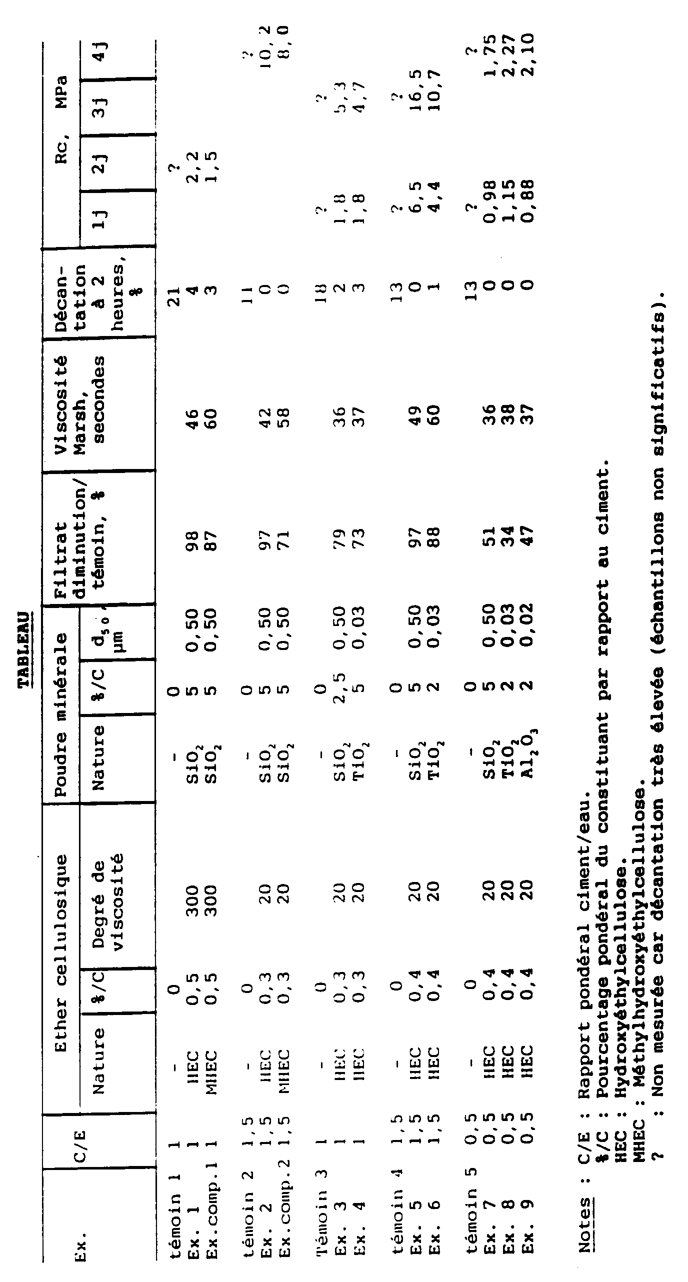

On voit d'après ce Tableau que les coulis de l'invention ont des propriétés nettement supérieures à celles des témoins ou à celles des coulis incorporant de la méthylhydroxyéthylcellulose, en dépit de la parenté étroite de cette dernière avec l'hydroxyéthylcellulose.

## Revendications

1. Coulis injectable comprenant un liant hydraulique en suspension dans de l'eau, caractérisé en ce qu'il comprend, en outre, par rapport au poids du liant hydraulique, (A) de 2 à 50% en poids de particules d'au moins une substance minérale dont le diamètre médian est inférieur à la moitié du diamètre médian des particules du liant hydraulique, et (B) de 0,05 à 5% en poids d'hydroxyéthylcellulose.

2. Coulis selon la revendication 1, caractérisé en ce que la proportion de l'ingrédient (A) représente 1 à 10% du poids du liant hydraulique.

3. Coulis selon la revendication 2, caractérisé en ce que la proportion de l'ingrédient (A) représente 2 à 5% du poids du liant hydraulique.

4. Coulis selon l'une quelconque des revendications 1 à 3, caractérisé en ce que la proportion de l'ingrédient (B) représente de 0,1 à 1% du poids du liant hydraulique.

5. Coulis selon l'une quelconque des revendications 1 à 4, caractérisé en ce que l'ingrédient (A) est choisi parmi la silice, le bioxyde de titane et l'alumine.

6. Procédé de consolidation et/ou d'étanchement de milieux granulaires et/ou de milieux fissurés par injection dans un tel milieu d'un coulis durcissable à base d'un liant hydraulique, caractérisé en ce que ledit coulis est tel que défini à l'une quelconque des revendications 1 à 5.

## Claims

1. An injectable grout including a hydraulic binder in suspension in water, characterised in that it additionally includes, relative to the weight of the hydraulic binder, (A) from 2 to 50% by weight of particles of at least one mineral substance whose median diameter is smaller than half the median diameter of the particles of the hydraulic binder, and (B) from 0.05 to 5% by weight of hydroxyethyl cellulose.

2. The grout as claimed in claim 1, characterised in that the proportion of the ingredient (A) represents 1 to 10% of the weight of the hydraulic binder.

3. The grout as claimed in claim 2, characterised in that the proportion of the ingredient (A) represents 2 to 5% of the weight of the hydraulic binder.

4. The grout as claimed in any one of claims 1 to 3, characterised in that the proportion of the ingredient (B) represents from 0.1 to 1% of the weight of the hydraulic binder.

5. The grout as claimed in any one of claims 1 to 4, characterised in that the ingredient (A) is selected from silica, titanium dioxide and alumina.

6. A process for consolidation and/or sealing of granular media and/or of fissured media by injection into such a medium of a curable grout based on a hydraulic binder, characterised in that the said binder is as defined in any one of claims 1 to 5.

## Patentansprüche

1. Injektionsschlamm mit einem hydraulischen Bindemittel als Suspension in Wasser, dadurch gekennzeichnet, daß er ferner, bezogen auf das Gewicht des hydraulischen Bindemittels, aufweist: (A) 2 bis 50 Gewichtsprozent von Partikeln wenigstens einer mineralischen Substanz, deren mittlerer Durchmesser kleiner als der Durchschnitt des mittleren Durchmessers der Partikel des hydraulischen Bindemittels ist, und (B) 0,05 bis 5 Gewichtsprozent Hydroxyethyl-Zellulose.

2. Schlamm nach Anspruch 1, dadurch gekennzeichnet, daß der Anteil des Bestandteils (A) 1 bis 10 Gewichtsprozent des hydraulischen Bindemittels ausmacht.

3. Schlamm nach Anspruch 2, dadurch gekennzeichnet, daß der Anteil des Bestandteils (A) 2 bis 5 Gewichtsprozent des hydraulischen Bindemittels ausmacht.

4. Schlamm nach einem der vorhergehenden Ansprüche 1 bis 3, dadurch gekennzeichnet, daß der Anteil des Bestandteils (A) 0,1 bis 1 Gewichtsprozent des hydraulischen Bindemittels ausmacht.

5. Schlamm nach einem der vorhergehenden Ansprüche 1 bis 4, dadurch gekennzeichnet, daß der Bestandteil (A) aus Siliziumdioxid, Titandioxid und Aluminiumoxid ausgewählt ist.

6. Verfahren zum Verfestigen und/oder Abdichten von körnigen und/oder rissigen Umgebungen durch Injizieren eines härtbaren, auf einem hydraulischen Bindemittel basierenden Schlamms in diese Umgebung, dadurch gekennzeichnet, daß der Schlamm ein Schlamm gemäß einem der Ansprüche 1 bis 5 ist.
